# EUROPÄISCHE PATENTSCHRIFT

(11) **EP 3 634 168 B1**
(45) Veröffentlichungstag und Bekanntmachung des Hinweises auf die Patenterteilung: **14.10.2020**
(21) Anmeldenummer: 17728444.5
(22) Anmeldetag: 06.06.2017
(51) Int. Cl.: A43B 13/04, A43B 13/18, A43D 1/02, B29D 35/12

(54) **VERFAHREN ZUM HERSTELLEN EINES SCHUHS, INSBESONDERE EINES SPORTSCHUHS**
METHOD FOR PRODUCING A SHOE, IN PARTICULAR A SPORTS SHOE
PROCÉDÉ DE FABRICATION D'UNE CHAUSSURE, EN PARTICULIER D'UNE CHAUSSURE DE SPORT

(43) Veröffentlichungstag der Anmeldung: 15.04.2020
(73) Patentinhaber: PUMA SE, 91074 Herzogenaurach (DE)
(72) Erfinder: HARTMANN, Matthias, 91301 Forchheim (DE)
(74) Vertreter: Gosdin, Carstensen & Partner Patentanwälte Partnerschaftgesellschaft mbB
(86) Internationale Anmeldenummer: PCT/EP2017/000651
(87) Internationale Veröffentlichungsnummer: WO 2018/224113

(56) Entgegenhaltungen:
- EP-A1- 2 206 442
- EP-A2- 2 649 896
- WO-A1-2009/095935
- WO-A1-2009/126111
- WO-A1-2014/100462
- US-A1- 2011 283 560

## Beschreibung

Die Erfindung betrifft ein Verfahren zum Herstellen eines Schuhs, insbesondere eines Sportschuhs, umfassend eine Schuhsohle und ein Schuhoberteil.

Klassische Herstellungsverfahren für Schuhe, insbesondere für Sportschuhe, sind bekannt. Zumeist wird eine Schuhsohle - gegebenenfalls bestehend aus mehreren Teilen (Außensohle, Zwischensohle, Innensohle) - hergestellt, was oft durch Spritzgießen eines geeigneten Kunststoffmaterials erfolgt. Dann wird das Schuhoberteil gefertigt, wobei Leder oder Textilmaterialien zum Einsatz kommen können. Zur Fertigstellung des Schuhs werden die Sohle und das Schuhoberteil miteinander verbunden, beispielsweise durch Vernähen oder Verkleben.

Aus der EP 2 649 896 A2 ist ein Herstellungsverfahren gemäß dem Oberbegriff des Anspruchs 1 bekannt, bei dem unterschiedliche Materialien zur Bildung der Sohle durch verschiedene Angüsse in die Kavität eines formgebenden Werkzeugs eingebracht werden (s. Figur 15c des Dokuments). Bei der Lösung nach der EP 2 206 442 A1 wird eine Außensohle in ein Werkzeug eingesetzt und anschließend ein Schuhoberteil auf einem Leisten auf die Außensohle aufgesetzt. Zur Verbindung von Schuhoberteil und Außensohle wird dann Polyurethan in das Werkzeug eingegossen (s. Figuren 8 und 9 des Dokuments). Andere Lösungen zeigen die WO 2009/095935 A1, die US 2011/0283560 A1, die WO 2014/100462 A1 und die WO 2009/126111 A1**.**

Um die Kosten der Schuhherstellung zu reduzieren, wird angestrebt, die Zeit für die Produktion der Sohle möglichst gering zu halten.

Ferner wird mitunter angestrebt, individuelle Wünsche des Benutzers eines Schuhs zu berücksichtigen, wobei Maßanfertigungen erfolgen können. Allerdings erfordert dies in der Regel einen hohen Kostenaufwand, da in erheblichem Umfang Arbeit entsprechender Schuh-Spezialisten benötigt wird.

Der Erfindung liegt die **Aufgabe** zugrunde, ein Verfahren der eingangs genannten Art so weiterzubilden, dass es möglich ist, in einfacher und damit kostengünstiger Weise einen optimal passenden Schuh bereitzustellen. Der Schuh soll dabei schnell und somit kostengünstig fertigbar sein, allerdings individuelle Bedürfnisse eines Benutzers befriedigen können. Der Einsatz von Spezialisten bei der Schuhherstellung soll vermindert oder ganz vermieden werden können.

Die **Lösung** dieser Aufgabe durch die Erfindung ist dadurch gekennzeichnet, dass die Herstellung der Schuhsohle die Schritte umfasst:
a) Bereitstellen einer Gießform zur Ausformung zumindest eines Teils der Schuhsohle, wobei die Gießform einen vertikal unten liegenden Bodenbereich und einen Seitenbereich aufweist, wobei der Seitenbereich eine seitliche Wandung der Gießformkavität bildet und im vertikal oben liegenden Endbereich zunächst offen ist;
b) Einspritzen eines ersten flüssigen Kunststoffmaterials in einen ersten Flächenabschnitt des Bodenbereichs der Gießform und zumindest Einspritzen eines zweiten flüssigen Kunststoffmaterials in einen zweiten Flächenabschnitt des Bodenbereichs der Gießform, wobei die beiden Kunststoffmaterialien unterschiedlich sind, wobei das Einspritzen des flüssigen Kunststoffmaterials durch mindestens eine Düse erfolgt, mittels der das Kunststoffmaterial in einem freien Strahl in den jeweiligen Flächenabschnitt gespritzt wird;
c) Schließen der Gießform durch einen vertikal oben liegenden Deckenbereich, der auf den Seitenbereich der Gießform aufgesetzt wird und Aushärtenlassen der Kunststoffmaterialien;
d) Öffnen der Gießform und Entformung des hergestellten Formteils,
wobei die mindestens eine Düse an einer Stelle des Seitenbereichs der Gießform angeordnet wird und von dort aus alle Kunststoffmaterialien eingespritzt werden.

Insoweit besteht ein Aspekt der Erfindung darin, die Gießform zur Ausformung der Schuhsohle zunächst oben geöffnet zu lassen, um dann über die genannte Düse unterschiedliches Kunststoffmaterial in mindestens zwei (Flächen)Bereiche einzuspritzen, was in der Form erfolgt, dass das Kunststoffmaterial in einem freien Strahl, also nach Art einer ballistischen Kurve in den Zielbereich der Gießform eingebracht wird. Dies hat den Vorteil, dass eine sehr schnelle Füllung der Gießform erfolgen kann, wobei allerdings durch den Einsatz von mindestens zwei unterschiedlichen Kunststoffmaterialien die Sohle des Schuhs mit speziellen und gewünschten mechanischen Eigenschaften versehen werden kann.

Die mindestens eine Düse wird bevorzugt an einer seitlichen Öffnung der Gießform angesetzt, um die Kunststoffmaterialien einzuspritzen.

Vor der Durchführung des oben genannten Schritts b) kann zwischen den einzelnen Flächenabschnitten des Bodenbereichs mindestens eine Wandung angeordnet werden, die den Fluss von Kunststoffmaterial vom einen Flächenabschnitt in den anderen Flächenabschnitt verhindert oder erschwert. In diesem Falle kann vorgesehen sein, dass die mindestens eine Wandung in vertikale Richtung relativ zum Bodenbereich der Gießform beweglich angeordnet ist.

Eine andere bevorzugte Ausführungsform des vorgeschlagenen Verfahrens sieht vor, dass nach der Durchführung des obigen Schritts a) und vor der Durchführung des genannten Schritts b) in den Bodenbereich der Gießform eine vorgefertigte Außensohle eingelegt wird, die Bestandteil der Schuhsohle ist. Die Außensohle kann dabei auf ihrer nach oben gerichteten Seite mindestens eine Wandung aufweisen, die den Fluss von Kunststoffmaterial vom einen Flächenabschnitt in den anderen Flächenabschnitt verhindert oder erschwert. Die genannte Wandung bildet somit verschiedene Kammern aus, die für die Aufnahme des entsprechenden Kunststoffmaterials bei der Herstellung der Zwischensohle vorgesehen sind. Somit wird es möglich, durch die Verwendung unterschiedlich ausgestaltete Außensohlen die Eigenschaften der sich bildenden Zwischensohle zu verändern. Als Material für die Außensohle kommt dabei insbesondere Gummi infrage.

Um einen individuell angefertigten Schuh in kostengünstiger Weise realisieren zu können, sieht eine Weiterbildung vor, dass vor der Durchführung des oben genannten Schritts a) die Schritte erfolgen:
a1) Messen mindestens einer individuellen Eigenschaft des Fußes einer Person und/oder einer Laufeigenschaft der Person mittels eines Messgeräts;
a2) Bestimmen des Verlaufs einer Material- und/oder mechanischen Eigenschaft der Schuhsohle oder eines Teils der Schuhsole entlang mindestens einer Erstreckungsrichtung der Schuhsohle in Abhängigkeit der gemäß Schritt a1) gemessenen Werte anhand eines vorgegebenen Algorithmus oder einer vorgegebenen Regel;
wobei im Anschluss daran die Fertigung der Schuhsohle gemäß den oben genannten Schritten a) bis d) erfolgt, so dass die Materialeigenschaften und/oder mechanischen Eigenschaften der Schuhsohle zumindest annähernd dem gemäß Schritt a2) bestimmten Verlauf entsprechen.

Nach dem oben genannten Schritt d) kann die Schuhsohle mit dem Schuhoberteil verbunden werden, um den fertigen Schuh herzustellen; die Verbindung erfolgt dabei bevorzugt durch Vernähen und/oder Verkleben von Schuhoberteil und Sohle.

Das Messen gemäß obigem Schritt a1) erfolgt bevorzugt, indem die Druckverteilung des Fußes der Person über der Auftrittsfläche des Fußes am Boden bestimmt wird, wobei das Messen vorzugsweise mittels einer Druckaufnahmeplatte erfolgt.

Das Messen gemäß obigem Schritt a1) kann auch erfolgen, indem das Laufverhalten der Person ermittelt wird, insbesondere die Tendenz des Fußes zur Pronation oder Supination, wobei das Messen vorzugsweise mittels einer Kamera und einem Laufband erfolgt.

Die Bestimmung gemäß obigem Schritt a2) erfolgt bevorzugt, indem der Verlauf einer Material- und/oder mechanischen Eigenschaft entlang der Längsachse der Schuhsohle festgelegt wird.

Mindestens einer der verwendeten Kunststoffmaterialien, vorzugsweise alle Kunststoffmaterialien, bestehen dabei bevorzugt aus Polyurethan, wobei dieses Material vorzugsweise geschäumt wird.

Die verschiedenen Kunststoffmaterialien können sich dabei in ihrer Härte im ausgehärteten Zustand unterscheiden, insbesondere in ihrer Shore-Härte. Sie können sich auch in ihrer Farbe unterscheiden. Durch Verwendung unterschiedlicher Farben kann dem Benutzer auch ein visueller Eindruck der Eigenart seines Schuhs vermittelt werden. Möglich sind auch farbliche Marmorierungs-Effekte.

Die verschiedenen Kunststoffmaterialien können sich auch dadurch unterscheiden, dass einem Grundmaterial mindestens ein Additiv in unterschiedlichem Maße zugegeben wird. Durch Zugabe eines Additivs kann dann die Materialeigenschaft bzw. mechanische Eigenschaft des Polyurethans verändert und somit gezielt gesteuert werden. Im Stand der Technik ist es dabei hinlänglich bekannt, welche Additive geeignet sind, um insbesondere beispielsweise die Härte des Polyurethans zu beeinflussen.

Alle genannten Fertigungsschritte der Schuhsohle erfolgen dabei gemäß einer bevorzugten Vorgehensweise in räumlicher Nähe, insbesondere in einem Schuhgeschäft. Das vorgeschlagene Verfahren ist besonders vorteilhaft, wenn es auf einer integrierten Anlage durchgeführt wird, die sowohl zeitlich als auch räumlich eine konzentrierte Herstellung des Schuhs erlaubt. Die Schritte können auch in zeitlicher Nähe erfolgen, insbesondere binnen eines Zeitraums von maximal 3 Stunden. Damit ist es möglich, sehr schnell einem Kunden einen individuell auf ihn zugeschnittenen Schuh anzubieten, der an seine Gegebenheiten optimal angepasst ist.

Am Ort der Fertigungsanlage für den Schuh, insbesondere also in einem Schuhgeschäft, wird dann zunächst beispielsweise ein Scan des Fußes des Kunden angefertigt und festgestellt, welche Laufcharakteristik der Kunde aufweist. Abhängig davon wird dann die Ausgestaltung der Sohle hinsichtlich verschiedener Zonen festgelegt und diese dann vor Ort hergestellt und mit einem Schuhoberteil verbunden.

Die genannte Bestimmung des Verlaufs einer Material- und/oder mechanischen Eigenschaft der Schuhsohle oder eines Teils der Schuhsole erfolgt bevorzugt, indem der Verlauf einer Material- und/oder mechanischen Eigenschaft entlang der Längsachse der Sohle festgelegt wird. Allerdings kann genauso vorteilhaft auch vorgesehen werden, dass der Verlauf einer Material- und/oder mechanischen Eigenschaft entlang der zur Längsachse quer verlaufenden Richtung der Sohle festgelegt wird. Besonders bevorzugt erfolgt eine Kombination beider angesprochener Vorgehensweisen, wonach besagter Verlauf einer Material- und/oder mechanischen Eigenschaft über den Verlauf der Ebene erfolgt, mit der der Fuß des Trägers auf dem Boden aufliegt.

Das vorgeschlagene Konzept stellt also darauf ab, eine Sohle bzw. einen Teil einer solchen bedarfsgerecht vorteilhaft direkt in einem Schuhgeschäft zu fertigen, wobei die Sohle bzw. das Sohlenteil abschnittsweise bzw. in vorgegebenen definierten Zonen unterschiedliche Eigenschaften aufweist.

In vorteilhafter Weise kann so ein individuell passgenauer Schuh, der einem Kunden also individuell angepasst ist, schnell und somit kostengünstig hergestellt werden. Darüber hinaus ergibt es sich, dass generell die Herstellung einer Schuhsohle und damit auch des Schuhs gemäß der vorgeschlagenen Vorgehensweise in einer sehr kurzen Zeit erfolgen kann, was wirtschaftliche Vorteile hat.

Das vorgeschlagene Verfahren eignet sich insbesondere auch gut für die Herstellung einer Schuhsohle für einen Fußballschuh.

Somit kann generell erreicht werden, dass in einfacher Weise Variationen in der Struktur der (Zwischen)Sohle realisiert werden können, was deren physikalische Eigenschaften in den unterschiedlichen Flächenbereichen anbelangt.

In der Zeichnung ist ein Ausführungsbeispiel der Erfindung dargestellt. Es zeigen:
- Fig. 1: schematisch in der Seitenansicht ein Schuhoberteil und eine Schuhsohle eines Sportschuhs, bevor diese beiden Komponenten miteinander verbunden werden,
- Fig. 2: schematisch die Draufsicht auf eine Druckaufnahmeplatte, mit der die Druckverteilung eines Fußes einer Person über der Aufstandsfläche auf dem Boden aufgenommen wurde,
- Fig. 3: schematisch in der geschnittenen Seitenansicht ein Gießwerkzeug, mit dem die Sohle eines Schuhs gefertigt wird, und
- Fig. 4: die Draufsicht auf das Gießwerkzeug, mit dem die Sohle des Schuhs gefertigt wird.

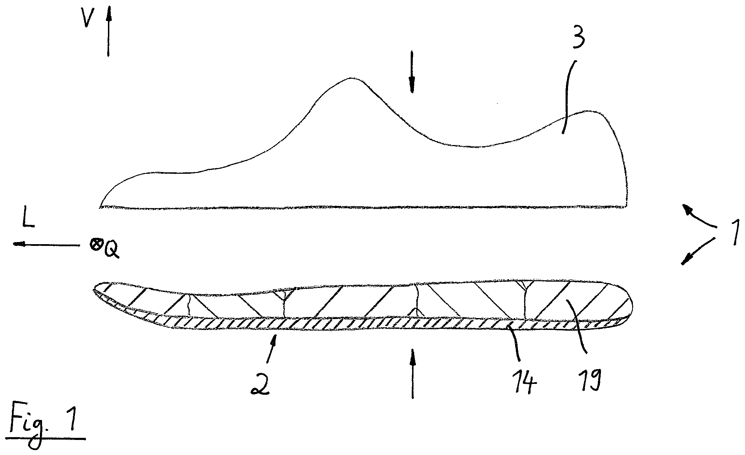

In Figur 1 ist ein Schuh 1 in Form eines Sportschuhs zu sehen, wobei die Schuhsohle 2 und das Schuhoberteil 3 voneinander noch getrennt sind. Die Schuhsohle 2 besteht hier aus einer Außensohle 14, die mit einer Zwischensohle 19 verbunden ist. Nachdem die Schuhsohle 2 hergestellt ist, wird diese mit dem Schuhoberteil 3 verbunden. Die Schuhsohle 2 und das Schuhoberteil 3 werden dann in Richtung der beiden Pfeile zusammengeführt und miteinander verbunden.

In der Figur ist die Längsachse L der Schuhsohle bzw. des Schuhs eingetragen sowie eine Richtung Q quer hierzu; weiterhin ist die Richtung der Vertikalen V eingetragen, die sich auf die bestimmungsgemäße Verwendung des Schuhs bezieht.

Die Herstellung der Zwischensohle 19 ist nachfolgend beschrieben, ein zentraler Aspekt darin besteht, dass die Zwischensohle 19 bereichsweise aus unterschiedlichen Kunststoffmaterialien gefertigt wird, was in Figur 1 durch unterschiedliche Schraffur angedeutet ist.

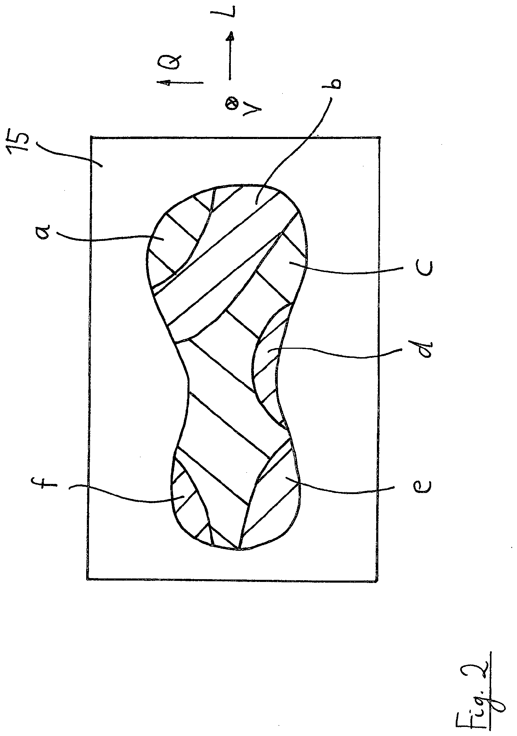

In Figur 2 ist schematisch eine ebene Druckaufnahmeplatte 15 dargestellt, die als Messgerät fungiert, mit dem die Druckverteilung gemessen wird, die sich ergibt, wenn eine Person auf die Druckaufnahmeplatte 15 auftritt. Schematisch und nur zum Zwecke der Illustration sind sechs Bereiche a, b, c, d, e und f skizziert, in denen unterschiedlicher Druck herrscht, wenn die Person auf dem Boden steht.

Insoweit kann mittels der Druckaufnahmeplatte 15 bestimmt werden, wie sich für eine individuelle Person die Druckverteilung infolge der persönlichen Ergonomie des Fußes ergibt. Anhand der Druckaufnahmeplatte 15 ist es daher möglich, die genannten Bereiche a, b, c, d, e und f zu identifizieren, in denen verschiedene Drücke herrschen (wobei für die verschiedenen genannten Bereiche jeweils Druckintervalle definiert sein können). Aufgrund der Längsachse L des Fußes und korrespondierend hierzu der Sohle des zu fertigenden Schuhs sowie der hierzu quer liegenden Richtung Q kann daher für eine individuelle Person anhand der Druckaufnahmeplatte die Druckverteilung über der Auftrittsfläche des Fußes auf dem Boden bestimmt werden.

Besagte Vermessung der Druckverteilung über der Auftrittsfläche kann einen ersten Schritt bei der Fertigung eines individuellen Schuhs darstellen (s. den oben genannten Schritt a1).

Alternativ oder additiv kann besagte Messung aber auch anders von statten gehen: Beispielsweise kann mittels einer Kamera der Fuß der Person während des Laufens bzw. Joggens auf einem Laufband beobachtet und hieraus Aussagen über das Pronations- bzw. Supinationsverhalten des Fußes der Person gewonnen werden.

In beiden Fällen ist es generell im weiteren Verlauf möglich, gemäß obigem Schritt a2) den Verlauf einer Materialeigenschaft bzw. einer mechanischen Eigenschaft der zu fertigenden Schuhsohle zu bestimmen. Hierunter ist zu verstehen, dass für unterschiedliche Bereiche der Sohle sowohl in Richtung der Längsachse L der Sohle als auch in Richtung Q quer hierzu beispielsweise die Festigkeit oder Härte des Sohlenmaterials definiert wird, die angestrebt wird, um dem Fuß der Person optimale Stütze zu geben.

So kann beispielsweise vorgesehen werden, dass in den Bereichen, in denen ein in Relation zu anderen Bereichen hoher Druck herrscht (siehe zum Beispiel den Bereich a) im Verhältnis zu dem Bereich d) in Figur 2) ein härteres Material vorgesehen wird, als es in anderen Bereichen der Sohle der Fall ist, um dem Fuß insoweit eine bessere Stütze zu geben.

Genauso kann beispielsweise additiv oder alternativ durch Auswertung des Pronations- oder Supinationsverhaltens des Fußes der Person gezielt durch Erhöhung oder Erniedrigung der Materialfestigkeit bzw. Materialsteifigkeit der Sohle einer Abweichung von einer Idealform entgegengewirkt werden.

Diese Festlegung des Verlaufs der Materialeigenschaft bzw. mechanischen Eigenschaft der Sohle über die Koordinaten L und Q kann dabei von einem Spezialisten vorgenommen werden. Genauso ist es aber auch möglich, dass durch Vorgabe eines entsprechenden Algorithmus die per Messgerät 15 ermittelten Werte automatisch in eine entsprechende Vorgabe für die besagten Eigenschaften umgerechnet werden. Obiger Schritt a2) wird folglich bevorzugt automatisch von einem Rechner durchgeführt. Hierzu können gegebenenfalls gespeicherte Vergleichswerte oder Optimalwerte für die Bestimmung des Verlaufs der Eigenschaften herangezogen werden, wobei besagte Werte gegebenenfalls auch nach Vorgabe von Daten der Person (z. B. Größe, Gewicht, Geschlecht) aus einer Datenbank entnommen werden können.

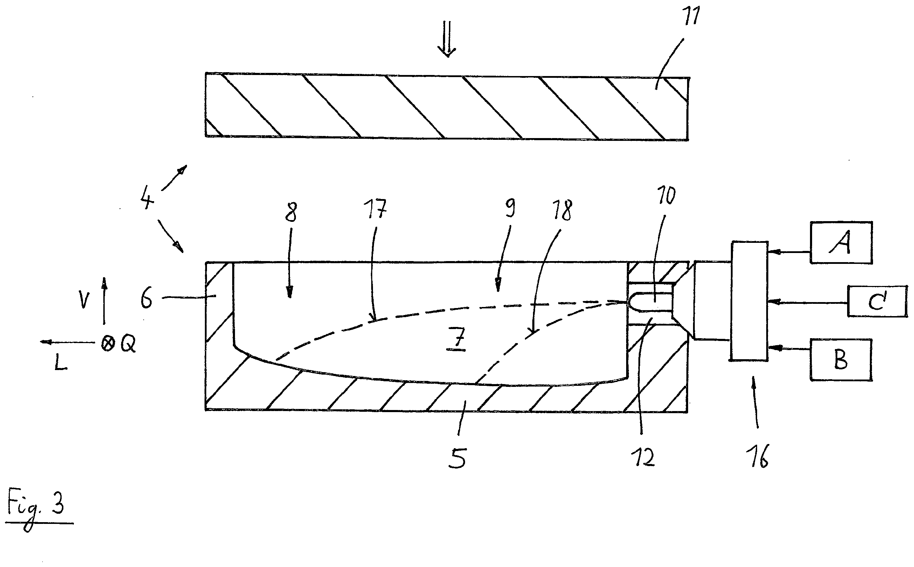

In Figur 3 sind die oben angesprochenen Schritte a) bis c) des Herstellens der Schuhsohle 2 illustriert.

Zu erkennen ist eine Gießform 4, mit der die Schuhsohle 2 produziert wird. Die Gießform 4 besteht aus einem unteren Werkzeugteil, das einen Bodenbereich 5 und einen Seitenbereich 6 aufweist und eine Gießformkavität 7 für die Schuhsohle 2 bildet. Weiterhin umfasst die Gießform 4 ein oberes Werkzeugteil in Form des Deckenbereichs 11, welches nach der Formfüllung auf das untere Werkzeugteil aufgesetzt wird, um die Schuhsohle 2 vollständig auszubilden.

Das untere Werkzeugteil der Gießform weist in einem Endbereich des Seitenbereichs 6 eine seitliche Öffnung 12 auf, die zum Ansetzen oder zum Einbringen einer Düse 10 ausgebildet ist. Die Düse 10 ist mit einem Mischkopf 16 verbunden, in dem im Ausführungsbeispiel Polyurethan gemischt und über die Düse 10 ausgebracht wird. Dabei wird ein erstes Grundmaterial A in Form von Polyol mit einem zweiten Grundmaterial B in Form von Isocyanat zum Polyurethan vermischt. Dargestellt ist weiterhin ein Behälter für ein Additiv C, das den Materialien A und B zugegeben werden kann und das dessen Materialeigenschaften bzw. mechanischen Eigenschaften verändert.

Nachdem die Gießform 4 zur Ausformung der Schuhsohle 2 in der in Figur 3 skizzierten Anordnung bereitgestellt ist (also mit nach oben abgehobenem Deckenbereich 11), wird flüssiges Kunststoffmaterial in die Gießformkavität 7 eingegeben. Dies erfolgt dadurch, dass über die Düse 10 das flüssige Kunststoffmaterial eingespritzt wird. Wesentlich ist dabei, dass mindestens zwei unterschiedliche Kunststoffmaterialien (entweder über dieselbe Düse 10 oder über mehrere Düsen 10) in die Gießformkavität eingegeben werden. Im Ausführungsbeispiel ist angedeutet, dass ein erstes flüssiges Kunststoffmaterial in einen ersten Flächenabschnitt 8 des Bodenbereichs 5 der Gießform 4 eingespritzt wird und weiterhin (zeitlich hintereinander oder gegebenenfalls auch zeitlich parallel) ein zweites flüssiges Kunststoffmaterial in einen zweiten Flächenabschnitt 9 des Bodenbereichs 5. Die beiden Kunststoffmaterialien haben dabei unterschiedliche Eigenschaften, die sich auf beliebige Werkstoffparameter beziehen können.

Wesentlich ist weiterhin, dass das Einspritzen des flüssigen Kunststoffmaterials durch die Düse 10 in der Weise erfolgt, dass das Kunststoffmaterial in einem freien Strahl in den jeweiligen Flächenabschnitt 8 bzw. 9 gespritzt wird. Hierzu sind in Figur 3 eine erste ballistische Bahn 17 und eine zweite ballistische Bahn 18 eingetragen, die die Flugbahn des jeweiligen Kunststoffmaterials bzw. des Strahls des Kunststoffmaterials markieren, welches dieses nimmt, bis es im Bodenbereich 5 der Gießform 4 zu liegen kommt.

Um die entsprechenden Bahnen 17 bzw. 18 zu realisieren, kann das Kunststoffmaterial mit entsprechendem, unterschiedlichem Druck aus der Düse 10 ausgebracht werden (und damit mit unterschiedlicher Geschwindigkeit). Alternativ oder additiv ist es natürlich auch möglich, dass die Ausrichtung der Düse 10 verändert wird (also der Austrittswinkel gegenüber der Horizontalen und auch gegenüber der Längsachse der Sohle), so dass das flüssige Kunststoffmaterial den gewünschten Bahnverlauf während des Einspritzens nimmt und schließlich den gewünschten Flächenbereich des Bodenbereichs der Gießform bedeckt.

Wenn die gewünschte Materialmenge in die Gießformkavität eingebracht ist, wird der Deckenbereich 11 der Gießform 4 abgesenkt (siehe Pfeil in Figur 3), so dass das Kunststoffmaterial sich in definierter Form zur fertigen Schuhsohle verfestigt. Anschließend kann die fertige Schuhsohle 2 der Gießform 4 entnommen werden.

Auf diese Art und Weise ist es möglich, in spezifisch definierten Flächenbereichen der Schuhsohle und insbesondere der Zwischensohle 19 Kunststoffmaterialien mit gewünschten Materialeigenschaften zu platzieren, um dann in der Folge eine (Zwischen)Sohle zu erhalten, die entsprechende Eigenschaften aufweist und die an individuelle Bedürfnisse angepasst sind.

Durch die Füllung der Gießformkavität 7 mit Kunststoffmaterial, welches im freien Strahl eingespritzt wird, ergibt sich eine sehr kurze Füllzeit und somit eine entsprechend kurze gesamte Produktionszeit der Sohle, was vorteilhaft ist.

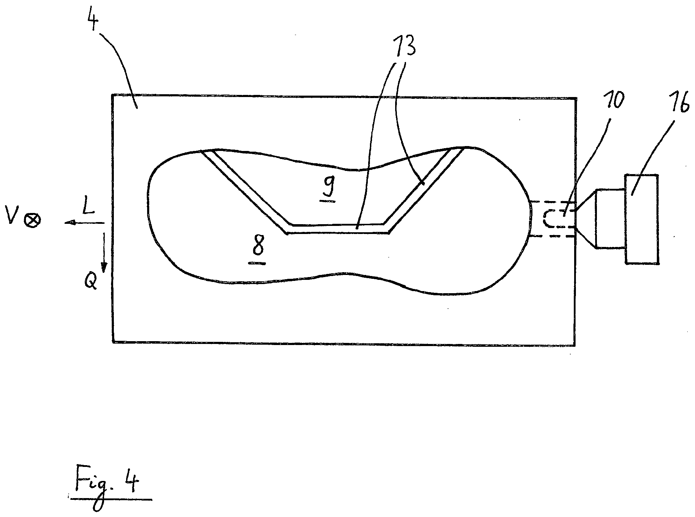

In Figur 4 ist eine spezielle Ausgestaltung der Gießform 4 illustriert, mit der bewerkstelligt werden kann, dass die jeweiligen verschiedenen Kunststoffmaterialien nur dort zu liegen kommen, wo sie gewünscht werden. Im Bodenbereich der Gießform ist hierzu eine Wandung 13 angeordnet, die nach Art eines Wehrs dafür sorgt, dass das noch flüssige Kunststoffmaterial im gewünschten Flächenabschnitt verbleibt. Die Wandung 13 ist hier als dünnes Blech ausgebildet, welches über eine gewisse Höhe bei der Füllung der Gießform aus dem Bodenbereich 5 der Gießform 4 in die Gießformkavität 7 hineinreicht und so den gewünschten Effekt erzeugt.

Dabei kann die Wandung 13 in vertikale Richtung V relativ verschieblich zum Bodenbereich 5 der Gießform 4 ausgebildet sein, so dass sie nach Erreichen eines hinreichenden Verfestigungsgrades aus der Gießformkavität herausgezogen wird.

Die Vorgehensweise wurde hier anhand zweier verschiedener Kunststoffmaterialien illustriert; tatsächlich können natürlich auch mehr als zwei verschiedene Kunststoffmaterialien eingesetzt werden. Möglich ist es auch, dass mehrere unterschiedliche Flächenabschnitte des Bodenbereichs mit dem gleichen Kunststoffmaterial gefüllt werden.

Eine alternative Möglichkeit, die die Verwendung der beschriebenen Wandung 13 entbehrlich macht, besteht darin, dass vor dem Eingeben des flüssigen Kunststoffmaterials eine Außensohle 14 in den Bodenbereich 5 der Gießform 4 eingelegt wird, die bei der beschriebenen Herstellung der Zwischensohle 19 stoffschlüssig mit der Außensohle 14 verbunden wird. Die Außensohle 14 kann dazu analog zur Wandung 13 nach oben ragende Stege aufweisen, die dafür sorgen, dass das eingegebene flüssige Kunststoffmaterial in seinem gewünschten Flächenabschnitt verbleibt, bis die Sohle fertiggestellt ist. Um eine universell verwendbare Außensohle (einer bestimmten Schuhgröße) bereitzustellen, können die genannten stegartigen Wandungen nach Art eines Musters ausgebildet sein, welches eine Vielzahl von Kammern für das flüssige Kunststoffmaterial bildet, die dann entsprechend der genannten Vorgabe mit dem jeweiligen Kunststoffmaterial gefüllt werden.

Im Ergebnis liegt dann eine Schuhsohle 2 vor, wie sie in Figur 1 illustriert ist. Hier ist durch die verschiedenartige Schraffur der Zwischensohle 19 angedeutet, dass beispielsweise durch unterschiedliche Wahl der Komponenten A, B und C und insbesondere durch unterschiedliche Zugabemengen des Additivs C über die Erstreckungsrichtung L der Sohle 2 unterschiedliche Abschnitte der Sohle 2 ausgebildet sind, die sich durch unterschiedliche Materialeigenschaften und/oder mechanischen Eigenschaften auszeichnen.

Es muss an dieser Stelle nicht erwähnt werden, dass es sich insoweit bei Figur 1 um eine schematische Darstellung des erläuterten Prinzips handelt, wobei es bei entsprechender Vorgabe der Materialverteilung in zwei Koordinatenrichtungen L und Q sinnvoll sein kann, gegebenenfalls durch mehrere Düsen 10 bzw. Mischköpfe 16 und gegebenenfalls auch an unterschiedlichen Stellen des Werkzeugs Material aufzubereiten und einzuspritzen, um in der Ebene gezielt eine gewünschte Verteilung des Materials mit den jeweiligen Eigenschaften zu erreichen.

### Bezugszeichenliste:

- 1: Schuh
- 2: Schuhsohle
- 3: Schuhoberteil
- 4: Gießform
- 5: Bodenbereich der Gießform
- 6: Seitenbereich der Gießform
- 7: Gießformkavität
- 8: erster Flächenabschnitt
- 9: zweiter Flächenabschnitt
- 10: Düse
- 11: Deckenbereich der Gießform
- 12: seitliche Öffnung der Gießform
- 13: Wandung
- 14: Außensohle
- 15: Messgerät (Druckaufnahmeplatte)
- 16: Mischkopf
- 17: erste ballistische Bahn
- 18: zweite ballistische Bahn
- 19: Zwischensohle

- L: Erstreckungsrichtung der Sohle (Längsachse der Sohle)
- Q: Richtung quer zur Längsachse
- V: vertikale Richtung
- A: erstes Grundmaterial (Polyol)
- B: zweites Grundmaterial (Isocyanat)
- C: Additiv

- a, b, c, d, e, f: Bereiche unterschiedlichen Drucks

## Patentansprüche

1. Verfahren zum Herstellen eines Schuhs (1), insbesondere eines Sportschuhs, umfassend eine Schuhsohle (2) und ein Schuhoberteil (3), wobei die Herstellung der Schuhsohle (2) die Schritte umfasst:
a) Bereitstellen einer Gießform (4) zur Ausformung zumindest eines Teils der Schuhsohle (2), wobei die Gießform (4) einen vertikal unten liegenden Bodenbereich (5) und einen Seitenbereich (6) aufweist, wobei der Seitenbereich (6) eine seitliche Wandung der Gießformkavität (7) bildet und im vertikal oben liegenden Endbereich zunächst offen ist;
b) Einspritzen eines ersten flüssigen Kunststoffmaterials in einen ersten Flächenabschnitt (8) des Bodenbereichs (5) der Gießform (4) und zumindest Einspritzen eines zweiten flüssigen Kunststoffmaterials in einen zweiten Flächenabschnitt (9) des Bodenbereichs (5) der Gießform (4), wobei die beiden Kunststoffmaterialien unterschiedlich sind, wobei das Einspritzen des flüssigen Kunststoffmaterials durch mindestens eine Düse (10) erfolgt, mittels der das Kunststoffmaterial in einem freien Strahl in den jeweiligen Flächenabschnitt (8, 9) gespritzt wird;
c) Schließen der Gießform (4) durch einen vertikal oben liegenden Deckenbereich (11), der auf den Seitenbereich (6) der Gießform (4) aufgesetzt wird und Aushärtenlassen der Kunststoffmaterialien;
d) Öffnen der Gießform (4) und Entformung des hergestellten Formteils,
**dadurch gekennzeichnet, dass**
die mindestens eine Düse (10) an einer Stelle des Seitenbereichs (6) der Gießform (4) angeordnet wird und von dort aus alle Kunststoffmaterialien eingespritzt werden.

2. Verfahren nach Anspruch 1, **dadurch gekennzeichnet, dass** die mindestens eine Düse (10) an einer seitlichen Öffnung (12) der Gießform (4) angesetzt wird, um die Kunststoffmaterialien einzuspritzen.

3. Verfahren nach Anspruch 1 oder 2, **dadurch gekennzeichnet, dass** vor der Durchführung des Schritts b) gemäß Anspruch 1 zwischen den einzelnen Flächenabschnitten (8, 9) des Bodenbereichs (5) mindestens eine Wandung (13) angeordnet wird, die den Fluss von Kunststoffmaterial vom einen Flächenabschnitt (8) in den anderen Flächenabschnitt (9) verhindert oder erschwert.

4. Verfahren nach Anspruch 3, **dadurch gekennzeichnet, dass** die mindestens eine Wandung (13) in vertikale Richtung (V) relativ zum Bodenbereich (5) der Gießform (4) beweglich angeordnet ist.

5. Verfahren nach Anspruch 1 oder 2, **dadurch gekennzeichnet, dass** nach der Durchführung von Schritt a) gemäß Anspruch 1 und vor der Durchführung von Schritt b) gemäß Anspruch 1 in den Bodenbereich (5) der Gießform (4) eine vorgefertigte Außensohle (14) eingelegt wird, die Bestandteil der Schuhsohle (2) ist.

6. Verfahren nach Anspruch 5, **dadurch gekennzeichnet, dass** die Außensohle (14) auf ihrer nach oben gerichteten Seite mindestens eine Wandung aufweist, die den Fluss von Kunststoffmaterial vom einen Flächenabschnitt (8) in den anderen Flächenabschnitt (9) verhindert oder erschwert.

7. Verfahren nach einem der Ansprüche 1 bis 6, **dadurch gekennzeichnet, dass** vor der Durchführung des Schritts a) gemäß Anspruch 1 die Schritte erfolgen:
a1) Messen mindestens einer individuellen Eigenschaft des Fußes einer Person und/oder einer Laufeigenschaft der Person mittels eines Messgeräts (15);
a2) Bestimmen des Verlaufs einer Material- und/oder mechanischen Eigenschaft der Schuhsohle (2) oder eines Teils der Schuhsole (2) entlang mindestens einer Erstreckungsrichtung (L) der Schuhsohle (2) in Abhängigkeit der gemäß Schritt a1) gemessenen Werte anhand eines vorgegebenen Algorithmus oder einer vorgegebenen Regel;
wobei im Anschluss daran die Fertigung der Schuhsohle (2) gemäß den Schritten a) bis d) von Anspruch 1 erfolgt, so dass die Materialeigenschaften und/oder mechanischen Eigenschaften der Schuhsohle (2) zumindest annähernd dem gemäß Schritt a2) bestimmten Verlauf entsprechen.

8. Verfahren nach einem der Ansprüche 1 bis 7, **dadurch gekennzeichnet, dass** nach Schritt d) von Anspruch 1 die Schuhsohle (2) mit dem Schuhoberteil (3) verbunden wird, um den fertigen Schuh (1) herzustellen, wobei die Verbindung vorzugsweise durch Vernähen und/oder Verkleben erfolgt.

9. Verfahren nach Anspruch 7, **dadurch gekennzeichnet, dass** das Messen gemäß Schritt a1) von Anspruch 7 erfolgt, indem die Druckverteilung des Fußes der Person über der Auftrittsfläche des Fußes am Boden bestimmt wird, wobei das Messen vorzugsweise mittels einer Druckaufnahmeplatte (15) erfolgt.

10. Verfahren nach Anspruch 7, **dadurch gekennzeichnet, dass** das Messen gemäß Schritt a1) von Anspruch 7 erfolgt, indem das Laufverhalten der Person ermittelt wird, insbesondere die Tendenz des Fußes zur Pronation oder Supination, wobei das Messen vorzugsweise mittels einer Kamera und einem Laufband erfolgt.

11. Verfahren nach einem der Ansprüche 7 bis 10, **dadurch gekennzeichnet, dass** die Bestimmung gemäß Schritt a2) nach Anspruch 7 erfolgt, indem der Verlauf einer Material- und/oder mechanischen Eigenschaft entlang der Längsachse (L) der Schuhsohle (2) festgelegt wird.

12. Verfahren nach einem der Ansprüche 1 bis 11, **dadurch gekennzeichnet, dass** mindestens einer der verwendeten Kunststoffmaterialien, vorzugsweise alle Kunststoffmaterialien, aus Polyurethan bestehen, wobei dieses Material vorzugsweise geschäumt wird.

13. Verfahren nach einem der Ansprüche 1 bis 12, **dadurch gekennzeichnet, dass** sich die verschiedenen Kunststoffmaterialien in ihrer Härte im ausgehärteten Zustand unterscheiden, insbesondere in ihrer Shore-Härte, und/oder dass sich die verschiedenen Kunststoffmaterialien in ihrer Farbe unterscheiden.

14. Verfahren nach einem der Ansprüche 1 bis 13, **dadurch gekennzeichnet, dass** sich die verschiedenen Kunststoffmaterialien dadurch unterscheiden, dass einem Grundmaterial (A, B) mindestens ein Additiv (C) in unterschiedlichem Maße zugegeben wird.

15. Verfahren nach einem der Ansprüche 1 bis 14, **dadurch gekennzeichnet, dass** alle Fertigungsschritte der Schuhsohle in räumlicher Nähe erfolgen, insbesondere in einem Schuhgeschäft.

## Claims

1. Method for producing a shoe (1), especially a sports shoe, comprising a shoe sole (2) and an upper (3), wherein the production of the shoe sole (2) comprises the steps:
a) Providing a casting mould (4) for forming at least a part of the shoe sole (2), wherein the casting mould (4) having a bottom region (5), which lies vertically at the bottom, and having a side region (6), wherein the side region (6) forming a side wall of the casting mould cavity (7) and initially being open in the end region lying vertically at the top;
b) Injecting a first liquid plastic material into a first surface section (8) of the bottom region (5) of the casting mould (4) and at least injecting a second liquid plastic material into a second surface section (9) of the bottom region (5) of the casting mould (4), wherein the two plastic materials being different, wherein the injection of the liquid plastic material being accomplished by means of at least one nozzle (10), by means of which the plastic material is injected in a free jet into the respective surface section (8, 9);
c) Closing the casting mould (4) by means of a cover region (11) lying vertically at the top, which cover region (1) is placed onto the side region (6) of the casting mould (4), and allowing the plastic materials to solidify;
d) Opening of the casting mould (4) and removing the produced moulded part,
**characterized in that**
the at least one nozzle (10) is arranged at a location of the side region (6) of the casting mould (4) and all plastic materials are injected from there.

2. Method according to claim 1, **characterized in that** the at least one nozzle (10) is joint at a side opening (12) of the casting mould (4) to inject the plastic materials.

3. Method according to claim 1 or 2, **characterized in that** prior to the execution of step b) of claim 1 at least one wall (13) is arranged between the single surface sections (8, 9) of the bottom region (5), which wall (13) prevents or impedes the flow of plastic material from one surface section (8) to the other surface section (9).

4. Method according to claim 3, **characterized in that** the at least one wall (13) is arranged movable in vertical direction (V) relatively to the bottom region (5) of the casting mould (4).

5. Method according to claim 1 or 2, **characterized in that** after the execution of step a) of claim 1 and prior to the execution of step b) of claim 1 a pre-manufactured outer sole (14) is layed in the bottom region (5) of the casting mould (4), which outer sole (14) is part of the shoe sole (2).

6. Method according to claim 5, **characterized in that** the outer sole (14) has at least one wall at its upward directed side, which wall prevents or impedes the flow of plastic material from one surface section (8) to the other surface section (9).

7. Method according to one of claims 1 to 6, **characterized in that** prior to the execution of step a) of claim 1 the steps are carried out:
a1) Measuring of at least one individual property of the foot of a person and/or of a running characteristic of the person by means of a measuring device (15);
a2) Determination of the distribution of a material property and/or of a mechanical property of the shoe sole (2) or of a part of the shoe sole (2) along at least one direction of extension (L) of the shoe sole (2) in dependence on the measured values according step a1) by means of a predetermined algorithm or a predetermined rule;
wherein subsequently to this the production of the shoe sole (2) according to steps a) to d) of claim 1 takes place, so that the material properties and/or the mechanical properties of the shoe sole (2) correspond at least approximately to the distribution as determined according to step a2).

8. Method according to one of claims 1 to 7, **characterized in that** after step d) of claim 1 the shoe sole (2) is connected with the upper (3) to produce the finished shoe (1), wherein the connection takes place preferably by sewing and/or by gluing.

9. Method according to claim 7, **characterized in that** the measuring according to step a1) of claim 7 takes place by determination of the pressure distribution of the foot of the person along the contact area of the foot at the ground, wherein the measurement takes place preferably by means of a pressure sensor plate.

10. Method according to claim 7, **characterized in that** the measuring according to step a1) of claim 7 takes place by determination of the running characteristics of the person, especially the tendency of the foot for pronation or supination, wherein the measuring takes place preferably by means of a camera and a treadmill.

11. Method according to one of claims 7 to 10, **characterized in that** the determination according to step a2) of claim 7 takes place by determining the distribution of the material property and/or mechanical property along the longitudinal axis (L) of the shoe sole (2).

12. Method according to one of claims 1 to 11, **characterized in that** at least one of the used plastic materials, preferably all plastic materials, consists of polyurethane, wherein the material is preferably foamed.

13. Method according to one of claims 1 to 12, **characterized in that** the different plastic materials differ in their hardness in the solidified state, especially in their Shore hardness and/or that the different plastic materials differ in their colour.

14. Method according to one of claims 1 to 13, **characterized in that** the different plastic materials differ in the fact that at least one additive (C) is added to a base material (A, B) in different quantity.

15. Method according to one of claims 1 to 14, **characterized in that** all production steps of the shoe sole take place in physical proximity, especially in a shoe shop.

## Revendications

1. Procédé de fabrication d'une chaussure (1), en particulier d'une chaussure de sport, comportant une semelle (2) et une tige (3), dans lequel la fabrication de la chaussure (2) comporte les étapes suivantes :
a) fourniture d'un moule (4) pour le formage d'au moins une partie de la semelle (2), dans lequel le moule (4) comprend une région de fond (5) située verticalement en bas et une région latérale (6), dans lequel la région latérale (6) forme une paroi latérale de la cavité de moule (7) et est tout d'abord ouverte dans la région d'extrémité située verticalement en haut ;
b) injection d'une première matière synthétique liquide dans une première partie de surface (8) de la région de fond (5) du moule (4) et au moins injection d'une deuxième matière synthétique liquide dans une deuxième partie de surface (9) de la région de fond (5) du moule (4), dans lequel les deux matières synthétiques sont différentes, dans lequel l'injection de la matière synthétique liquide s'effectue à travers au moins une buse (10), au moyen de laquelle la matière synthétique est pulvérisée en un jet libre dans la partie de surface respective (8, 9) ;
c) fermeture du moule (4) au moyen d'une région de couvercle (11) située verticalement en haut, laquelle est placée sur la région latérale (6) du moule (4) et durcissement des matières synthétiques ;
d) ouverture du moule (4) et démoulage de la pièce moulée fabriquée,
**caractérisé en ce que**
l'au moins une buse (10) est disposée en un point de la région latérale (6) du moule (4) et, à partir de là, toutes les matières synthétiques sont injectées.

2. Procédé selon la revendication 1, **caractérisé en ce que** l'au moins une buse (10) est appliquée contre une ouverture latérale (12) du moule (4), afin d'injecter les matières synthétiques.

3. Procédé selon la revendication 1 ou 2, **caractérisé en ce qu'**avant la mise en œuvre de l'étape b) selon la revendication 1, au moins une paroi (13) est disposée entre les parties de surface individuelles (8, 9) de la région de fond (5), laquelle paroi empêche ou entrave le flux de matière synthétique à partir d'une partie de surface (8) dans l'autre partie de surface (9).

4. Procédé selon la revendication 3, **caractérisé en ce que** l'au moins une paroi (13) est disposée de manière mobile par rapport à la région de fond (5) du moule (4) dans la direction verticale (V).

5. Procédé selon la revendication 1 ou 2, **caractérisé en ce qu'**après la mise en œuvre de l'étape a) selon la revendication 1 et avant la mise en œuvre de l'étape b) selon la revendication 1, une semelle d'usure préfabriquée (14) est insérée dans la région de fond (5) du moule (4), laquelle semelle d'usure fait partie de la semelle (2).

6. Procédé selon la revendication 5, **caractérisé en ce que** la semelle d'usure (14) comprend, sur son côté orienté vers le haut, au moins une paroi qui empêche ou entrave le flux de matière synthétique à partir d'une partie de surface (8) dans l'autre partie de surface (9) .

7. Procédé selon l'une des revendications 1 à 6, **caractérisé en ce qu'**avant la mise en œuvre de l'étape a) selon la revendication 1, les étapes suivantes sont effectuées :
a1) mesure d'au moins une caractéristique individuelle du pied d'une personne et/ou d'une caractéristique de course de la personne au moyen d'un appareil de mesure (15) ;
a2) détermination de l'allure d'une caractéristique de matière et/ou mécanique de la semelle (2) ou d'une partie de la semelle (2) le long d'au moins une direction d'étendue (L) de la semelle (2) en fonction des valeurs mesurées selon l'étape a1) à l'aide d'un algorithme prédéfini ou d'une règle prédéfinie ;
dans lequel, à la suite de cela, la fabrication de la semelle (2) s'effectue selon des étapes a) à d) de la revendication 1, de telle sorte que des caractéristiques de matière et/ou les caractéristiques mécaniques de la semelle (2) correspondent au moins approximativement à l'allure déterminée selon l'étape a2).

8. Procédé selon l'une des revendications 1 à 7, **caractérisé en ce qu'**après l'étape d) de la revendication 1, la semelle (2) est reliée à la tige (3), afin de fabriquer la chaussure finie (1), la liaison s'effectuant de préférence par couture et/ou collage.

9. Procédé selon la revendication 7, **caractérisé en ce que** la mesure selon l'étape a1) de la revendication 7 s'effectue par détermination de la répartition de pression du pied de la personne sur la surface d'appui du pied sur le sol, la mesure s'effectuant de préférence au moyen d'une plaque d'enregistrement de pression (15).

10. Procédé selon la revendication 7, **caractérisé en ce que** la mesure selon l'étape a1) de la revendication 7 s'effectue par détermination du comportement de course de la personne, en particulier de la tendance du pied à la pronation ou à la supination, la mesure s'effectuant de préférence au moyen d'une caméra et d'un tapis de course.

11. Procédé selon l'une des revendications 7 à 10, **caractérisé en ce que** la détermination selon l'étape a2) selon la revendication 7 s'effectue par définition de l'allure d'une caractéristique de matière et/ou mécanique le long de l'axe longitudinal (L) de la semelle (2).

12. Procédé selon l'une des revendications 1 à 11, **caractérisé en ce qu'**au moins l'une des matières synthétiques utilisées, de préférence toutes les matières synthétiques, sont constituées de polyuréthane, cette matière étant de préférence moussée.

13. Procédé selon l'une des revendications 1 à 12, **caractérisé en ce que** les différentes matières synthétiques diffèrent de par leur dureté à l'état durci, en particulier de par leur dureté Shore, et/ou **en ce que** les différentes matières synthétiques diffèrent de par leurs couleurs.

14. Procédé selon l'une des revendications 1 à 13, **caractérisé en ce que** les différentes matières synthétiques diffèrent par le fait qu'au moins un additif (C) est ajouté dans une mesure différente à une matière de base (A, B).

15. Procédé selon l'une des revendications 1 à 14, **caractérisé en ce que** toutes les étapes de fabrication de la semelle s'effectuent de manière spatialement proche, en particulier dans un magasin de chaussures.
